# EUROPÄISCHE PATENTSCHRIFT

(11) **EP 0 667 662 B1**
(45) Veröffentlichungstag und Bekanntmachung des Hinweises auf die Patenterteilung: **18.06.1997**
(21) Anmeldenummer: 94120656.7
(22) Anmeldetag: 24.12.1994
(51) Int. Cl.: H02B 13/02, H02B 13/035

(54) **Schaltanlage mit einem Verbindungskanal**
Switchgear with connection channel
Installation de commutation avec canal de connexion

(30) Priorität: 11.02.1994 DE 4404340
(43) Veröffentlichungstag der Anmeldung: 16.08.1995
(73) Patentinhaber: AEG Sachsenwerk GmbH, D-93055 Regensburg (DE)
(72) Erfinder: Reichl, Erwin, Dipl.-Ing., D-93105 Tegernheim (DE); Stegmüller, Karl, Dipl.-Ing., D-93109 Wiesent (DE); Heinzelmann, Werner, D-93051 Regensburg (DE)
(74) Vertreter: Dreiss, Fuhlendorf, Steimle & Becker

(56) Entgegenhaltungen:
- EP-A- 0 438 769
- DE-U- 1 815 915
- US-A- 1 938 508

## Beschreibung

Die Erfindung betrifft eine Schaltanlage gemäß dem Oberbegriff des ersten Anspruchs.

Eine bekannte gasisolierte Schaltanlage dieser Art (DE 40 01 909 A1) besteht aus zwei im wesentlichen quaderförmigen Schaltfeldgehäusen, in welchen die für den Betrieb in Mittelspannungsnetzen erforderlichen Sammelschienen, Schalter und dgl. in einer Isoliergasfüllung angeordnet sind. Zur Verbindung der Sammelschienen in den beiden Schaltfeldgehäusen dient ein Verbindungskanal, in dem ein elektrischer Verbindungsleiter von der einen Sammelschiene zur anderen geführt ist. Der Verbindungskanal umgibt den Verbindungsleiter mit entsprechendem radialen Abstand und sitzt mit seinen offenen Enden auf den Deckseitenwänden der beiden Schaltfeldgehäuse auf oder ist in Verlängerung der Sammelschienenachsen zwischen die parallel zueinander angeordneten senkrechten Stirnseitenwände der beiden Schaltfeldgehäuse gasdicht eingefügt. Bei diesem Aufbau überragt der gesamte Verbindungskanal die quaderförmige Außenkontur der Schaltfeldgehäuse bzw. ist zwischen den Schaltfeldgehäusen ein der axialen Länge des Verbindungskanals entsprechender Abstand erforderlich.

Der Erfindung liegt die Aufgabe zugrunde, bei einer Schaltanlage gemäß dem Oberbegriff des ersten Anspruchs Maßnahmen zu treffen, durch welche ein raumsparender Aufbau ermöglicht wird.

Die Lösung dieser Aufgabe erfolgt gemäß der Erfindung durch die kennzeichnenden Merkmale des ersten Anspruchs.

Bei einer Ausgestaltung einer Schaltanlage gemäß der Erfindung wird ein Gehäusekantenbereich zwischen einer Stirnseitenwand und einer benachbarten Gehäuseseitenwand, insbesondere der Deckseitenwand nach Art einer Fase zu einer Verbindungswand umgestaltet, die gegenüber der Ebene der Stirnseitenwand um weniger als 90 Winkelgrade geneigt ist. Die Verbindungswand bildet somit eine geneigte Verbindungsfläche zwischen der Stirnseitenwand und der betreffenden Geräteseitenwand und ist auch an den übrigen Kanten gasdicht mit den dort liegenden weiteren Gehäuseseitenwänden verbunden. Durch Aneinanderstellen von zwei Schaltfeldgehäusen mit geneigten Verbindungswänden entsteht somit ein V-förmiger freier Raum außerhalb der Schaltfeldgehäuse, in dem der Verbindungskanal mit dem Verbindungsleiter angeordnet werden kann. Durch die gegenläufige Abplattung der benachbarten Kantenbereiche der Schaltfeldgehäuse ist somit innerhalb der Schaltfeldgehäuseaußenkontur auch bei eng benachbart stehenden Stirnseitenwänden ein Raum für die zumindest teilweise Unterbringung des Verbindungskanals geschaffen. Die Verbindungswand ist vorzugsweise plan ausgebildet, sie kann jedoch im Bedarfsfall auch in einem Bogen gewölbt oder stufig ausgebildet sein. Die Verbindungswand trägt wenigstens eine elektrisch isolierende Durchführung mit einem Durchführungsleiter, der einerseits mit der im Schaltfeldgehäuse eingeschlossenen Sammelschiene und außerhalb mit dem Verbindungsleiter zu verbinden ist. Bei einer dreiphasigen Schaltanlage sind der Verbindungswand entsprechend drei Durchführungen zugeordnet, die von einem gemeinsamen Verbindungskanal umschlossen sein können. Der Verbindungskanal umschließt die Durchführungen mit seinen offenen als Dichtflansch ausgebildeten Enden und ist gasdicht auf den Verbindungswänden festgeschraubt. Der Verbindungskanal kann bis auf die notwendigen endseitigen Öffnungen als geschlossene Hülle ausgebildet sein, wobei dann die Montage des Verbindungsleiters mit den Durchführungsleitern durch die Öffnungen des Verbindungskanals hindurch erfolgen muß, bevor der Verbindungskanal an der Verbindungswand festgesetzt wird. Der Verbindungsleiter kann dabei mittels einer Schraubverbindung an die Durchführungsleiter angeschraubt werden. Zur Montagevereinfachung ist es jedoch zweckmäßig, eine Steckverbindung, insbesondere nach Art von Messerkontakten vorzusehen. Dabei kann es zweckmäßig sein, den Verbindungsleiter einendig schwenkbeweglich an einem Durchführungsleiter anzulenken, um am Montageort nur eine Schraub- oder Steckverbindung am anderen Ende manuell ausführen zu müssen. Die beiden Dichtflansche eines Verbindungskanals können einstückig ausgebildet und dabei im Bereich der Verbindungskanten zwischen den zugehörigen Verbindungswänden und den Stirnseitenwänden miteinander verbunden sein. Um hierbei den Dichtflansch mittels rundum verteilter Schraubverbindungen gasdicht an die Verbindungswand anschrauben zu können, ist der Verbindungskanal von Rohrstutzen durchsetzt, deren Außenmantelfläche gasdicht mit den betreffenden Kanalwänden verschweißt ist und die wenigstens ein Schraubelement umschließen, das sonst durch den Kanal verdeckt im Bereich des Grundes der V-förmigen Vertiefung liegt. Durch das Innere des Rohrstutzens kann somit von außen mit einem Werkzeug zu den Schraubelementen zugegriffen werden. Der Verbindungskanal kann jedoch auch als glattes Rohr mit der Neigung der Verbindungswände entsprechend schräggestellten Dichtflanschen ausgebildet sein, wobei die Dichtflansche rundum den Rohrquerschnitt nach außen überragen, so daß der Abstand von der mit der Stirnseitenwand verbundenen Seitenkante der Verbindungswand zum Verbindungskanal größer ist als zum nächstliegenden Abschnitt des jeweiligen Flansches. Es bleibt dadurch im Bereich des Grundes der V-förmigen Gehäuseeinformung ein frei zugänglicher Raum, durch den Montagearbeiten an den Schraubverbindungen auch an den unterhalb des Verbindungskanals liegenden Schraubverbindungen möglich sind. Der Verbindungskanal wird vorzugsweise wie die Schaltfeldgehäuse mit Isoliergas gefüllt. Das kann durch entsprechende Befüllarbeiten am Montageort durchgeführt werden. Vorzugsweise ist jedoch wenigstens einer der Verbindungswände eine manuell oder elektrisch steuerbare Ventilanordnung zugeordnet, die nach der Montage des Verbindungskanals mit dem Verbindungsleiter und ggf. Evakuierung des Verbindungskanalvolumens geöffnet wird, so daß Isoliergas aus einem Schaltfeldgehäuse in den Verbindungskanal strömen kann. Das im Betrieb geöffnete Ventil kann dann zugleich als Druckausgleich für den Fall dienen, daß im Verbindungskanal ein Störlichtbogen auftritt.

Die Erfindung ist nachfolgend anhand der Prinzipskizzen von Ausführungsbeispielen näher erläutert.

Es zeigen:
- Fig. 1: die Anordnung eines Verbindungskanals in einem V-förmigen Gehäuseeinschnitt zwischen benachbarten Schaltfeldgehäusen,
- Fig. 2: eine in eine Ebene aufgeklappte, im Schnitt dargestellte Draufsicht auf eine Anordnung entsprechend Fig. 1,
- Fig. 3-6: Abwandlungen der Anordnung nach Fig. 1.

Zwei im wesentlichen quaderförmige Schaltfeldgehäuse 1 und 2 sind Teil einer nicht näher dargestellten Schaltanlage, insbesondere für Mittelspannungsnetze, in welchen jeweils eine Sammelschiene bzw. ein Sammelschienensystem 3 und Schalter 4 sowie andere funktionsnotwendige Bauelemente angeordnet sind. Die beiden Schaltfeldgehäuse 1,2 stehen mit parallel zueinander angeordneten senkrechten Stirnseitenwänden 5 eng benachbart nebeneinander. Zur elektrischen Verbindung der Sammelschienen 3 dient ein die Schaltfeldgehäuse 1,2 gasdicht verbindender Verbindungskanal 6, in dem ein Verbindungsleiter 7 geführt ist, der an seinen Enden über je eine Durchführung aus einem Durchführungsisolator 8 und einem Durchführungsleiter 9 mit den Sammelschienen 3 in den Schaltfeldgehäusen 1 und 2 elektrisch leitend verbunden ist.

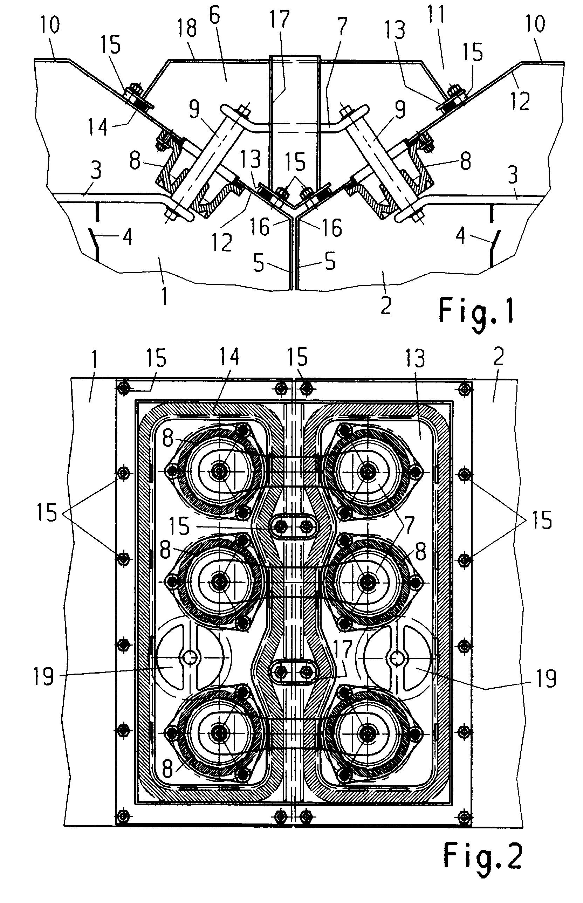

Um eine räumlich gedrängte Bauweise zu ermöglichen, ist für die Unterbringung des Verbindungskanals 6 im sonst vorhandenen Kantenbereich zwischen den Stirnseitenwänden 5 und den zugehörigen oberen Deckseitenwänden 10 der beiden Schaltfeldgehäuse 1 und 2 eine Vertiefung 11 vorgesehen, die durch entsprechend schräg gestellte Verbindungswände 12 zwischen zusammengehörigen Stirnseitenwänden 5 und Deckseitenwänden 10 gebildet ist. Die Verbindungswände 12 stellen somit jeweils eine Kantenfase am betreffenden Schaltfeldgehäuse 1 bzw. 2 dar. Die Vertiefung 11 ist somit im Querschnitt V-förmig und öffnet sich von den Stirnseitenwänden 5 zu den Deckseitenwänden 10 hin. Der Neigungswinkel der Verbindungswände 12 kann frei gewählt werden und muß auch bei den Schaltfeldgehäusen 1,2 nicht identisch sein. Vorzugsweise ist die Neigung jedoch aus fertigungstechnischen Gründen gleichgroß und beträgt bezogen auf die Stirnseitenwände 5 etwa zwischen 20 und 70 Winkelgraden. Die Verbindungswände 12 sind mit den Durchführungen 8,9 versehen, wobei je eine offene Stirnseite 13 des Verbindungskanals 6 eine oder gemäß Fig. 2 mehrere, insbesondere 3 Durchführungen 8,9 umgreift und dicht auf der Verbindungswand 12 aufsitzt. Zur Abdichtung der offenen Stirnseiten 13 gegenüber der betreffenden Verbindungswand 12 dienen Ringdichtungen 14 die einem entsprechenden Flansch 13 an der offenen Stirnseite zugeordnet sind. Befestigungsmittel 15 in Form von Schraubverbindungen oder dgl. sorgen für die notwendige Druckanlage der Dichtung an der Verbindungswand 12 und der jeweiligen offenen Stirnseite 13.

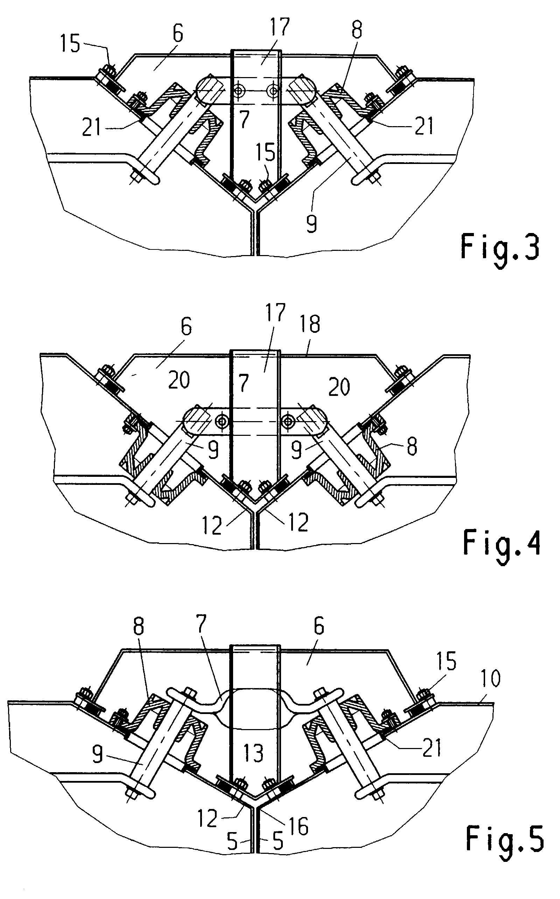

Der Verbindungsleiter 7 kann mit den zugehörigen Durchführungsleitern 9 verschraubt sein. Vorzugsweise sind jedoch zur Montageerleichterung Steckverbindungen 20 vorgesehen, wie es die Fig. 3,4 und 7 zeigen, wobei insbesondere Messerkontaktverbindungen bevorzugt werden. Dabei kann der Verbindungskanal 6 bis auf die die Durchführungen 8,9 umgreifenden Öffnungen vollkommen geschlossen sein, nachdem insbesondere bei der Anordnung von mehreren Durchführungen 8,9 auf einer Verbindungswand 12 eine ausreichende freie Zugriffsfläche in den Verbindungskanal 6 verbleibt, durch die hindurch manuell die Schraub- oder Steckverbindungen ausgeführt werden können, bevor der Verbindungskanal 6 an den Verbindungswänden 12 festgesetzt wird.

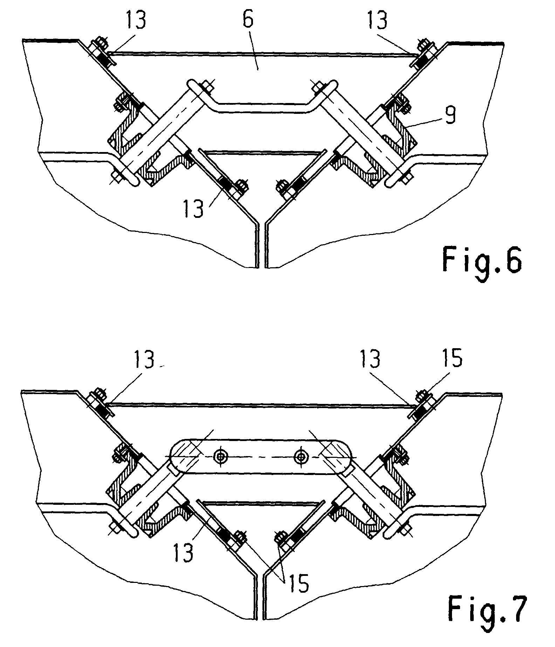

Die Durchführungsisolatoren 8 sind topfförmig ausgebildet und gemäß den Fig. 1,4,6 und 7 in das Innere des jeweiligen Schaltfeldgehäuses 1 bzw. 2 hineingerichtet. Reicht der Raum innerhalb des jeweiligen Schaltfeldgehäuses 1 oder 2 für diese Anordnung nicht aus, können die am offenen Rand 21 festgesetzten Durchführungsisolatoren 8 auch nach außen und in den Verbindungskanal 6 hineinragen, wie es die Fig. 3 und 5 darstellen. Es ist auch möglich, den Verbindungsleiter 7 einendig an einem Durchführungsleiter 9 schwenkbeweglich anzulenken, so daß an der Montagestelle nur noch die andere Steckverbindung manuell ausgeführt werden muß.

Gemäß den Fig. 1 bis 5 ist der Verbindungskanal 6 in seinem Querschnitt der Kontur der Vertiefung 11 angepaßt. Dabei sind die beiden die Öffnungen des Verbindungskanals 6 aufnehmenden Dichtflansche 13 einstückig miteinander verbunden und V-förmig ausgebildet. Sie sind somit im Bereich der Verbindungskanten 16 zwischen den zugehörigen Verbindungswänden 12 und den Stirnseitenwänden 5 miteinander verbunden. Hierdurch ergibt sich eine einfache Herstellmöglichkeit für die Dichtungsflansche 13, jedoch sind die in der Nähe der Verbindungskanten 16 liegenden Schraubverbindungen 15 durch den Verbindungskanal 6 abgedeckt. Um dort den Zugriff zu den Schraubverbindungen 15 zu ermöglichen, ist der Verbindungskanal 6 mit Rohrstutzen 17 versehen, die gasdicht durch seine frei zugängliche Deckwand 18 bis an die Dichtflansche 13 hindurchgeführt sind. Der Innenraum der Rohrstutzen 17 umgreift dabei Schraubverbindungen 15, so daß von außen durch die Rohrstutzen ein freier Zugang zu diesen Schraubverbindungen 15 gewährleistet ist.

Der Verbindungskanal 6 kann gemäß den Fig. 6 und 7 jedoch auch in Längsrichtung des Verbindungsleiters 7 einen zumindest weitgehend gleichbleibenden Querschnitt aufweisen. Dann kann der Dichtungsflansch 13 diesen Querschnitt rundum radial nach außen überragen, wenn der Abstand von der mit der Stirnseitenwand 5 verbundenen Seitenkante 16 der Verbindungswand 12 zum Verbindungskanal 6 größer ist als zum nächstliegenden Abschnitt des Flansches 13. Im Bereich der dort liegenden Schraubverbindungen 15 verbleibt dann soviel freier Raum, gegenüber den Gehäusen 1,2, daß eine Montage der dort ansich verdeckt liegenden Befestigungsmittel ausgeführt werden kann.

Der Verbindungskanal 6 wird im fertig montierten Zustand für den üblichen Betrieb im Mittelspannungsbereich mit Isoliergas gefüllt. Hierzu wird der Verbindungskanal 6 nach seiner festen Montage mit den Schaltfeldgehäusen 1,2 nötigenfalls evakuiert und mit dem Isoliergas gefüllt. Um hierbei ein Befüllen mit Isoliergas an der Baustelle zu vermeiden, kann gemäß Fig. 2 in wenigstens einer der Verbindungswände 12 eine Ventilanordnung 19 vorgesehen sein, die manuell steuerbar ist und im Anlieferungszustand der Schaltfeldgehäuse 1,2 geschlossen ist. Die Schaltfeldgehäuse 1,2 können daher bereits mit der betriebsnotwendigen Isoliergasfüllung versehen sein. Am Montageort braucht dann für das Befüllen des Verbindungskanals 6 lediglich eine Ventilanordnung 19 geöffnet zu werden, so daß das mit Überdruck im jeweiligen Schaltfeldgehäuse 1,2 befindliche Isoliergas in den Verbindungskanal 6 einströmt. Dieses Ventil kann anschließend offenbleiben, so daß im Falle eines Störlichtbogens innerhalb des Verbindungskanals ein Druckausgleich zum betreffenden Schaltfeldgehäuse 1,2 hin möglich ist.

Die Vertiefung 11 kann im übrigen auch entlang von senkrechten Kantenbereichen der Schaltfeldgehäuse 1,2 vorgesehen sein, so daß der Verbindungskanal 6 mit dem Verbindungsleiter 7 auch an diesen Orten mit gleichem Vorteil montiert werden kann.

Wird in der Deckwand 18 des Verbindungskanals ein Montagedeckel vorgesehen, der für sich abnehmbar und gasdicht mit der Deckwand 18 verbindbar ist, dann kann zuerst der Verbindungskanal 6 fest an den Gehäusen 1,2 montiert werden, wobei die Schraubverbindungen 15 innerhalb des Verbindungskanals angeordnet sein und die Rohrstutzen 17 entfallen können. Durch die Öffnung hindurch lassen sich gleichzeitig die Verbindungsleiter 7 montieren. Danach kann der Montagedeckel wieder gasdicht auf die Deckwand 18 aufgesetzt werden.

## Patentansprüche

1. Schaltanlage, insbesondere gasisolierte Schaltanlage, mit wenigstens zwei im wesentlichen quaderförmigen Schaltfeldgehäusen (1,2), die mittels eines einen Verbindungsleiter (7) aufnehmenden Verbindungskanals (6) miteinander gekuppelt sind und die mit parallel zueinander angeordneten senkrechten Stirnseitenwänden (5) eng benachbart nebeneinander stehen, dadurch gekennzeichnet, daß der Verbindungskanal (6) außerhalb einer Stirnseitenwand (5) an eine daran anschließende Verbindungswand (12) angesetzt ist, die gegenüber der Ebene der Stirnseitenwand (5) um weniger als 90 Winkelgrade geneigt und mit benachbarten weiteren Seitenwänden (10) verbunden ist.

2. Schaltanlage nach Anspruch 1, dadurch gekennzeichnet, daß die Verbindungswand (12) etwa um 20 Grad bis 70 Grad geneigt ist.

3. Schaltanlage nach Anspruch 1 oder 2, dadurch gekennzeichnet, daß die Verbindungswand (12) nach Art einer Kantenfase am Schaltfeldgehäuse (1,2) ausgebildet ist.

4. Schaltanlage nach Anspruch 1 oder einem der folgenden, dadurch gekennzeichnet, daß die Verbindungswand (12) wenigstens eine elektrisch isolierende Durchführung (8,9) trägt, daß je eine offene Stirnseite (13) des Verbindungskanals (6) die Durchführung (8,9) umgreift und dicht auf der Verbindungwand (12) aufsitzt und daß Durchführungsleiter (9) der Durchführungen (8,9) benachbarter Verbindungswände (12) mittels des Verbindungsleiters (7) elektrisch miteinander gekuppelt sind.

5. Schaltanlage nach Anspruch 4, dadurch gekennzeichnet, daß der Verbindungsleiter (7) beidendig mittels je einer Steckverbindung (20) mit dem jeweils zugehörigen Durchführungsleiter (7) elektrisch gekuppelt ist.

6. Schaltanlage nach Anspruch 5, dadurch gekennzeichnet, daß die Steckverbindung (20) nach Art einer Messerkontaktverbindung ausgebildet ist.

7. Schaltanlage nach Anspruch 1 oder einem der folgenden, dadurch gekennzeichnet, daß der Verbindungsleiter (7) einendig an einem Durchführungsleiter (9) schwenkbeweglich angelenkt ist.

8. Schaltanlage nach Anspruch 1 oder einem der folgenden, dadurch gekennzeichnet, daß der Verbindungskanal (6) an seinem die zugehörigen Durchführungen (8,9) umschließenden offenen Enden je einen parallel zur zugehörigen Verbindungswand (12) stehender Dichtungsflansch (13) aufweist, der mit der jeweiligen Verbindungswand (12) verschraubt ist.

9. Schaltanlage nach Anspruch 8, dadurch gekennzeichnet, daß der Verbindungskanal (6) in Längsrichtung des Verbindungsleiters (7) einen zumindest weitgehend gleichbleibenden Querschnitt aufweist, daß der Dichtflansch (13) diesen Querschnitt rundum radial nach außen überragt und daß der Abstand von der mit der Stirnseitenwand (5) verbundenen Seitenkante (16) der Verbindungswand (12) zum Verbindungskanal (6) größer als zum nächstliegendem Abschnitt des Flansches (13) ist.

10. Schaltanlage nach einem der Ansprüche 1 bis 8, dadurch gekennzeichnet, daß die beidendigen Dichtflansche (13) des Verbindungskanals (6) einstückig ausgebildet und im Bereich der Verbindungskanten (16) zwischen den zugehörigen Verbindungswänden (12) und den Stirnseitenwänden (5) miteinander verbunden sind.

11. Schaltanlage nach Anspruch 9 oder 10, dadurch gekennzeichnet, daß der Verbindungskanal (6) wenigstens einen ihn gasdicht durchsetzenden, zugriffseitig offenen Rohrstutzen (17) aufweist, der wenigstens ein Schraubelement (15) am Dichtflansch (13) umgreift.

12. Schaltanlage nach Anspruch 1 oder einem folgenden, dadurch gekennzeichnet, daß der Verbindungskanal (6) mit Isoliergas gefüllt ist.

13. Schaltanlage nach Anspruch 1 oder einem der folgenden, dadurch gekennzeichnet, daß der Verbindungskanal (6) mit dem Innenraum wenigstens eines Schaltfeldgehäuses (1,2) über ein steuerbares Ventil (19) verbunden ist.

14. Schaltanlage nach Anspruch 1 oder einem der folgenden, dadurch gekennzeichnet, daß in einer Deckwand (18) des Verbindungskanals (6) eine durch einen gasdicht anzusetzenden Montagedeckel zu verschließende Öffnung vorgesehen ist.

15. Schaltanlage nach Anspruch 14, dadurch gekennzeichnet, daß Schraubverbindungen (15) innerhalb des Verbindungskanals (6) angeordnet sind.

## Claims

1. Switchgear, in particular gas-insulated switchgear, with at least two substantially cuboid switch panel housings (1, 2), which are coupled by means of a connecting channel (6) holding a connecting lead (7) and which are placed closely adjacent to one another with their vertical end face walls (5) arranged parallel to one another, characterised in that the connecting channel (6) is attached outside an end face wall (5) to a connecting wall (12) which adjoins the end face wall and which is inclined relative to the plane of the end face wall (5) by less than 90 degrees and is connected to adjacent further side walls (10).

2. Switchgear according to claim 1, characterised in that the connecting wall (12) is inclined by approximately 20 degrees to 70 degrees.

3. Switchgear according to claim 1 or 2, characterised in that the connecting wall (12) is formed in the manner of an edge bevel on the switch panel housing (1, 2).

4. Switchgear according to claim 1 or one of the subsequent claims, characterised in that the connecting wall (12) carries at least one electrically insulating conduit (8, 9), in that a respective open end face (13) of the connecting channel (6) encompasses the conduit (8, 9) and rests flush on the connecting wall (12), and in that through-leads (9) of the conduits (8, 9) of adjacent connecting walls (12) are electrically coupled together by means of the through-lead (7).

5. Switchgear according to claim 4, characterised in that the connecting lead (7) is electrically coupled at both ends by means of a respective plug connection (20) to the respectively associated through -lead (7).

6. Switchgear according to claim 5, characterised in that the plug connection (20) is formed in the manner of a blade contact connection.

7. Switchgear according to claim 1 or one of the subsequent claims, characterised in that the connecting lead (7) is coupled pivotably at one end to a through-lead (9).

8. Switchgear according to claim 1 or one of the subsequent claims, characterised in that the connecting channel (6) at its open ends enclosing the associated conduits (8, 9) has a respective sealing flange (13) standing parallel to the associated connecting wall (12) and screwed to the respective connecting wall (12).

9. Switchgear according to claim 8, characterised in that the connecting channel (6) has in the longitudinal direction of the connecting lead (7) a cross-section which is at least substantially constant, in that the sealing flange (13) projects radially outwards around this cross-section and in that the distance from the side edge (16) connected to the end face wall (5) of the connecting wall (12) to the connecting channel (6) is larger than to the next section of the flange (13).

10. Switchgear according to one of claims 1 to 8, characterised in that the sealing flanges (13) on both ends of the connecting channel (6) are formed in one piece and are connected together in the region of the connecting edges (16) between the associated connecting walls (12) and the end face walls (5).

11. Switchgear according to claim 9 or 10, characterised in that the connecting channel (6) has at least one tubular member (17) which passes through in a gas-tight manner, is open on the access side, and encompasses at least one screw element (15) on the sealing flange (13).

12. Switchgear according to claim 1 or one of the subsequent claims, characterised in that the connecting channel (6) is filled with insulating gas.

13. Switchgear according to claim 1 or one of the subsequent claims, characterised in that the connecting channel (6) is connected to the interior of at least one switching panel housing (1, 2) via a controllable valve (19).

14. Switchgear according to claim 1 or one of the subsequent claims, characterised in that in a cover wall (18) of the connecting channel (6) an aperture is provided which is to be closed by a mounting cover to be applied in a gas-tight manner.

15. Switchgear according to claim 14, characterised in that screw connections (15) are disposed inside the connecting channel (6).

## Revendications

1. Installation de distribution, en particulier installation de distribution, isolée au gaz, comprenant au moins deux coffrets de panneaux de couplage (1, 2) de forme essentiellement quadrilatère, qui sont accouplés entre eux à l'aide d'au moins un canal de connexion (6) logeant un conducteur de connexion (7) et qui sont placés tout près les uns à côté des autres par des parois latérales avant (5) perpendiculaires et disposées parallèlement entre elles, caractérisée en ce que le canal de connexion (6) est placé, à l'extérieur d'une paroi latérale avant (5), sur une paroi de connexion (12) se trouvant dans le prolongement, qui est inclinée par rapport au plan de la paroi latérale avant (5) suivant un angle inférieur à 90 degrés et qui est reliée aux autres parois latérales voisines (10).

2. Installation de distribution selon la revendication 1, caractérisée en ce que la paroi de connexion (12) est inclinée suivant un angle compris entre 20 degrés et 70 degrés.

3. Installation de distribution selon la revendication 1 ou 2, caractérisée en ce que la paroi de connexion (12) est ménagée sur le coffret de panneaux de couplage (1, 2) à la manière d'un chanfrein.

4. Installation de distribution selon la revendication 1 ou l'une des suivantes, caractérisée en ce que la paroi de connexion (12) porte au moins un passage isolé électriquement (8, 9), en ce que chaque face frontale ouverte (13) du canal de jonction (6) entoure le passage (8, 9) et prend appui de manière hermétique sur la paroi de connexion (12) et en ce que des conducteurs de passage (9) des passages (8, 9) des parois de connexion voisines (12) sont accouplés électriquement entre eux au moyen du conducteur de connexion (7).

5. Installation de distribution selon la revendication 4, caractérisée en ce que le conducteur de connexion (7) est accouplé électriquement, par les deux extrémités, au moyen d'une connexion à fiche (20), au conducteur de passage respectif (7).

6. Installation de distribution selon la revendication 5, caractérisée en ce que la connexion à fiche (20) est conçue comme une connexion par contact à couteau.

7. Installation de distribution selon la revendication 1 ou l'une des suivantes, caractérisée en ce que le conducteur de connexion (7) est articulé, à une extrémité, à un conducteur de passage (9), de manière pivotante.

8. Installation de distribution selon la revendication 1 ou l'une des suivantes, caractérisée en ce que le canal de connexion (6) présente, à son extrémité ouverte entourant les passages respectifs (8, 9), une bride d'étanchéité (13) qui est parallèle à la paroi de connexion respective (12) et qui est vissée à la paroi de connexion respective (12).

9. Installation de distribution selon la revendication 8, caractérisée en ce que le canal de connexion (6) présente, dans le sens de la longueur du conducteur de connexion (7), une section transversale au moins largement constante, en ce que la bride d'étanchéité (13) fait saillie radialement tout autour de cette section transversale vers l'extérieur, et en ce que la distance du bord latéral (16) de la paroi de connexion (12), relié à la paroi latérale avant (5), au canal de connexion (6) est plus grande que celle du bord latéral à la portion la plus proche de la bride (13).

10. Installation de distribution selon l'une des revendications 1 à 8, caractérisée en ce qu'aux deux extrémités, les brides d'étanchéité (13) du canal de connexion (6) sont réalisées d'une seule pièce et sont reliées entre elles dans la zone des bords de connexion (16) entre les parois de connexion respectives (12) et les parois latérales avant (5).

11. Installation de distribution selon la revendication 9 ou 10, caractérisée en ce que le canal de connexion (6) est traversé de manière étanche au gaz par au moins une tubulure (17), ouverte du côté de l'accès, qui enveloppe au moins un élément formant vis (15) sur la bride d'étanchéité (13).

12. Installation de distribution selon la revendication 1 ou l'une des suivantes, caractérisée en ce que le canal de connexion (6) est rempli de gaz isolant.

13. Installation de distribution selon la revendication 1 ou l'une des suivantes, caractérisée en ce que le canal de connexion (6) est relié à l'intérieur d'au moins un coffret de panneaux de couplage (1, 2), par une soupape commandable (19).

14. Installation de distribution selon la revendication 1 ou l'une des suivantes, caractérisée en ce qu'il est prévu, dans une paroi de couverture (18) du canal de connexion (6), une ouverture à fermer par un couvercle de montage devant être monté de manière étanche au gaz.

15. Installation de distribution selon la revendication 14, caractérisée en ce que des connexions à vis (15) sont disposées à l'intérieur du canal de connexion (6).
